# EUROPEAN PATENT APPLICATION

(11) **EP 1 521 162 A2**
(43) Date of publication of application: **06.04.2005**
(21) Application number: 04023206.8
(22) Date of filing: 29.09.2004
(51) Int. Cl.: G06F 1/00

(54) **Method of managing file structure in memory card**

(30) Priority: 30.09.2003 JP 2003340458; 09.04.2004 JP 2004114876
(71) Applicant: MATSUSHITA ELECTRIC INDUSTRIAL CO., LTD., Kadoma-shi, Osaka 571-8501 (JP)
(72) Inventor: Wada, Hiroyuki, Mino-shi Osaka 562-0005 (JP); Fujimura, Kazuya, Ikoma-shi Nara 630-0141 (JP); Hiramitsu, Miki, Gifu-shi GIFU 500-8223 (JP)
(74) Representative: TER MEER STEINMEISTER & PARTNER GbR

(57) **Abstract**

A method of managing a file structure in a memory card comprises the steps of verifying whether or not a first management file exists in a general area of a memory card which is generally accessible, verifying whether or not available information on an encryption key stored in the first management file exists, when existence of the first management file is verified, and verifying whether or not a second management file exists in an authentication area which requires an authentication process for accessing a memory, when existence of the available information on said encryption key is verified.

## Description

### BACKGROUND OF THE INVENTION

### 1. Field of the Invention

The present invention relates to a method of managing whether a file structure in various memory cards including an SD (Secure Digital) memory card is normal or abnormal.

### 2. Description of the Related Art

There exists an SD memory card or the like as a recording medium having an enhanced security function with a small size and a large capacity relevant to a digital network device. This memory card provides the ability that data with large volume is input/output at high-speed, and is abundantly used for recording image information, especially moving image information, music information, or the like. The SD memory card has a copyright management function which approves watching/listening to contents (reproduction) only to those who are legally licensed from a legal copyright holder as standard equipment.

However, in managing a file structure in a conventional memory card, it is not configured so as to perform a validity management in a state where a general area and an authentication area are differentiated. Thus, it is desired to further improve security thereof. In other words, it becomes important to perform an integrated and cooperative validity management of both of the general area and the authentication area.

### BRIEF SUMMARY OF THE INVENTION

A method of managing a file structure in a memory card according to the present invention comprises the steps of:
verifying whether or not a first management file exists in a general area of a memory card which is generally accessible,
verifying whether or not available information on an encryption key stored in said first management file exists, when existence of said first management file is verified; and
verifying whether or not a second management file exists in an authentication area which requires an authentication process for accessing a memory, when existence of the available information on said encryption key is verified.

At first, it is verified whether or not the first management file exists in the general area. The first management file records information on contents data (for example, title, data coding system, data volume, or the like) . When the existence of the first management file is verified, it is verified whether or not the available information on the encryption key exists in the first management file. In other words, when said contents data is encrypted, it is verified whether or not the available information on the encryption key exists in any second management file in the authentication area. Then, it is verified whether or not the second management file for storing the encryption key exists in the authentication area.

In summary, according to such a procedure as [verification of the first management file in the general area->verification of the available information on the encryption key] -> [verification of the second management file based on the available information on the encryption key in the authentication area] , it becomes possible to integrally and cooperatively manage the authentication area for managing the security of the memory card and the general area other than that to verify the validity. It becomes therefore possible to individually store the encrypted contents data (hereafter it is written as encrypted data) and the contents encryption key in individual areas to cooperatively manage them, thereby making it possible to improve the security.

Next, description will be made of an embodiment of the invention having a starting point to verify whether or not a contents storage folder exists in the general area.

A method of managing a file structure in a memory card according to the present invention comprises the steps of:
verifying whether or not a contents storage folder exists in a general area of a memory card which is generally accessible;
verifying whether or not a first management file exists in said general area, when existence of said contents storage folder is verified;
verifying whether or not available information on an encryption key stored in said first management file exists, when existence of said first management file is verified; and
verifying whether or not a second management file exists in an authentication area which requires an authentication process for accessing a memory, when existence of the available information on said encryption key is verified.

At first, it is verified whether or not the contents storage folder for storing contents data exists in the general area, and after verifying the existence of the contents storage folder, it is verified whether or not the first management file exists. The first management file records information on the contents data included in the contents storage folder. When the existence of the first management file is verified, it is verified whether or not the available information on the encryption key exists in the first management file. In other words, when the contents data stored in said contents storage folder is encrypted, information which indicates whether or not the available information on the encryption key exists in any second management file in the authentication area is verified. Then, it is verified whether or not the second management file for storing the encryption key exists in the authentication area.

In summary, according to such a procedure as [verification of the contents storage folder in the general area->verification of the first management file->verification of the available information on the encryption key]->[verification of the second management file based on the available information on the encryption key in the authentication area], it becomes possible to integrally and cooperatively manage the authentication area for managing the security of the memory card and the general area other than that to verify the validity. It is therefore possible to individually store the encrypted data and the contents encryption key in individual areas to cooperatively manage them, thereby making it possible to improve the security.

In the above invention, although the starting point is to verify whether or not the contents storage folder exists in the general area, the starting point may be to verify whether or not the first management file exists in the general area instead of that. Hereinafter, description will be made of an embodiment of the invention having a starting point to verify whether or not the first management file exists in the general area.

A method of managing a file structure in a memory card according to the present invention comprises the steps of:
verifying whether or not a first management file exists in a general area of a memory card which is generally accessible,
verifying whether or not available information on an encryption key stored in said first management file exists, when existence of said first management file is verified,
verifying whether or not a second management file exists in an authentication area which requires an authentication process for accessing a memory, when existence of the available information on said encryption key is verified,
verifying whether or not an available encryption key exists in said authentication area, when existence of said second management file is verified, and
verifying whether or not encrypted data exists in a contents storage folder of said general area, when existence of said encryption key is verified.

That is, such a procedure as [verification of the first management file in the general area->verification of the available information on the encryption key]->[verification of the second management file based on the available information on the encryption key in the authentication area->verification of the encryption key]->[verification of the encrypted data in the contents storage folder in the general area] is performed.

According to this, it becomes possible to integrally and cooperatively manage the authentication area for managing the security of the memory card and the general area other than that to verify the validity. It is therefore possible to individually store the encrypted data and the contents encryption key in individual areas to cooperatively manage them, thereby making it possible to improve the security.

Incidentally, in the above invention, instead of said "authentication area", it may also be possible to perform the steps using a "key storage area" which does not require the authentication. The key storage area is different from the general area, and does not require the authentication. Additional objects and advantages of the present invention will be apparent from the following detailed description of preferred embodiments thereof, which are best understood with reference to the accompanying drawings.

### BRIEF DESCRIPTION OF THE DRAWINGS

FIG. 1 is a block diagram of a mobile phone unit and an SD memory card to which a method of managing a file structure in a memory card in an embodiment of the present invention is applied;
FIG. 2 is a file system configuration of the SD memory card in the embodiment of the present invention;
FIG. 3 is a flow chart which shows a procedure of a validity verification process of a file structure management system in a first embodiment of the present invention (first flow chart);
FIG. 4 is a flow chart which shows a procedure of a validity verification process of a file structure management system in the first embodiment of the present invention (second flow chart) ;
FIG. 5 is a flow chart which shows a procedure of a validity verification process of a file structure management system in a first modification of the first embodiment of the present invention;
FIG. 6 is a file system configuration of an SD memory card in a second modification of the first embodiment of the present invention;
FIG. 7 is a flow chart which shows a procedure of a validity verification process of a file structure management system in a second modification of the first embodiment of the present invention (first flow chart) ;
FIG. 8 is a flow chart which shows a procedure of a validity verification process of a file structure management system in the second modification of the first embodiment of the present invention (second flow chart) ;
FIG. 9 is a flow chart which shows a procedure of a validity verification process of a file structure management system in a third modification of the first embodiment of the present invention (first flow chart) ;
FIG. 10 is a flow chart which shows a procedure of a validity verification process of a file structure management system in a third modification of the first embodiment of the present invention (second flow chart) ;
FIG. 11 is a flow chart which shows a procedure of a validity verification process of a file structure management system in a second embodiment of the present invention;
FIG. 12 is a flow chart which shows a procedure of a validity verification process of a file structure management system in a modification (A) of the second embodiment of the present invention;
FIG. 13 is a flow chart which shows a procedure of an addition/deletion of contents data in a modification (B) of the second embodiment of the present invention;
FIG. 14 is a flow chart which shows a procedure of a validity verification process of a file structure management system in the modification (B) of the second embodiment of the present invention;
FIG. 15 is a flow chart which shows a procedure of an addition/deletion of contents data in a modification (C) of the second embodiment of the present invention;
FIG. 16 is a flow chart which shows a procedure of a validity verification process of a file structure management system in the modification (C) of the second embodiment of the present invention; and
FIG. 17 is a flow chart which shows a procedure of an external storage of a file in a modification (D) of the second embodiment of the present invention.

The same reference numeral is given to the same portion among each view.

### DETAILED DESCRIPTION OF THE PREFERRED EMBODIMENTS

Hereafter, referring to drawings, description will be made of embodiments of a method of managing a file structure in a memory card according to the present invention.

A mobile phone unit will be described hereinafter. However, it is not limited to the mobile phone unit, but it may also be applied to other devices, for example a personal computer, PDA (Personal Digital Assistant) , or other devices which are included in various kinds of information management systems. For example, it may also be a device such as a cooking device, a washing machine, a cleaner, a refrigerator, and other various electrical home appliances, and various business machines such as a copying machine and a FAX machine; and all other devices may be subjects.

In addition, an SD memory card will be described as an example of the memory card. However, it is not limit to the SD memory card, but it may be applied to other various memory cards, or it may also be applied to various record media which record information by other magnetic, optical, chemical, or physical information recording means and combinations thereof.

### (First embodiment)

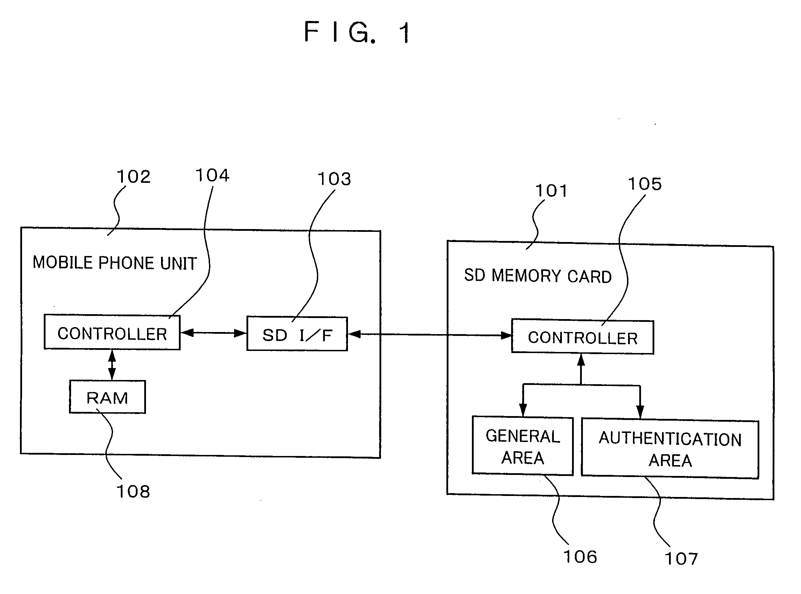

FIG. 1 is a block diagram of a main portion for achieving a method of managing a file structure in a memory card in a first embodiment of the present invention. In FIG. 1, reference numeral 101 represents a memory card such as an SD memory card, and reference numeral 102 represents a mobile phone unit. The mobile phone unit 102 performs a method for managing that a file structure in the memory card 101 is to be normal. Alternatively, this method may be carried out by a mounted computer which executes a program for performing this method recorded in a mounted recording medium.

The mobile phone unit 102 internally comprises a controller 104, a RAM 108, and a memory card interface 103. It also comprises a number of components in addition to this, but it is not directly related to the present invention, so discussion will be omitted.

The mobile phone unit 102 performs data communication, especially multimedia contents data communication including moving images and static images other than voice communication, and provides a function for watching/listening to the communicated image information (reproduction) and storing it. The controller 104 performs these controls and the RAM 108 temporarily stores contents data. The contents data temporarily stored therein is recorded and stored in the memory card 101 via the interface 103.

The memory card 101 internally comprises a general area (general recording area) 106 and an authentication area (authentication recording area) 107 which manages security of the memory card, and the contents data sent from the mobile phone unit 102 is recorded and stored in either area. A controller 105 performs this recording/storing process. The memory card 101 also comprises a number of components in addition to this, but it is not directly related to the present invention, so discussion will be omitted.

The authentication area 107 is an area which cannot be accessed to input/output information, unless a predetermined authentication process, for example biometrics such as password input or fingerprint authentication, and some other authentication processes are performed. However, instead of an area which cannot be accessed unless a certain authentication process is performed, the authentication area 107 may be an area which can be accessed without any authentication (mere key storage area) , and it may also be a case that the authentication area 107 is not necessarily split from the above general area 106.

The general area 106 and the authentication area 107 are recording portions with large capacity. In order to record data at high speed and accurately in such recording portions with large capacity and search it, a predetermined file system structure is employed.

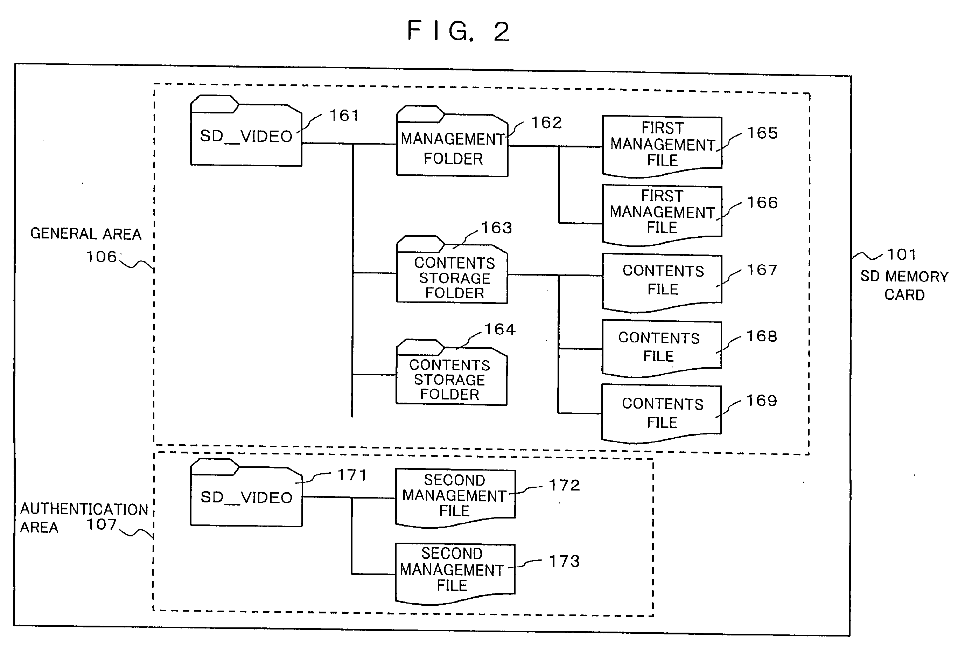

A schematic diagram of a file structure management system described above is shown in FIG. 2.

The whole recording portion of the memory card 101 is divided into the general area 106 and the authentication area 107. Folders 161 and 171 called SD_VIDEO are set to portions used as a root of a file system of each area. The memory card 101 may be called a SD_VIDEO card.

Information indicating a management folder 162 and two contents storage folders 163 and 164, for example, is recorded in the SD_VIDEO folder 161 of the general area 106, so that the management folder 162 and the contents storage folders 163 and 164 may be accessed by tracing this information.

Information indicating two first management files 165 and 166 is recorded in the management folder 162, so that the first management files 165 and 166 may be accessed by tracing this information.

Information on the contents data included in, for example two contents storage folders 163 and 164 is recorded in the first management files 165 and 166. There recorded in the first management files 165 and 166 are various kinds of control item data on various kinds of the contents data stored in the contents storage folders 163 and 164, for example, title, creation date, author, information on copyright, compression format of image information, coding system of speech information, image size of image information, resolution, data volume, reproduction time of moving image information or speech information, and other various required information. Common information for each contents data is recorded in the first management file 165, and individual information for each contents data is recorded in the first management file 166. However, this configuration is strictly for the purpose of an example, and it may be relative whether the information thereof is common information or individual information, and may not be absolute. For example, all of the information may be included in one of the first management files, or may be split into three or more first management files. Alternatively, it may be recorded in different first management files for each of contents, or each of certain groups of contents.

As a more important item, when the contents data stored in the contents storage folders 163 and 164 are encrypted, information indicating second management files 172 and 173 in the authentication area 107 which has recorded the encryption key is recorded therein.

When the contents data is encrypted, the contents data may not be reproduced and watched/listened, unless the encryption is decrypted. Only those who have predetermined authority can decrypt the encrypted information. The decryption key is therefore recorded in the authentication area 107 which cannot be accessed unless a predetermined authentication is performed. Information indicating the second management files 172 and 173 of the authentication area 107 where the key is recorded is recorded in the first management files 165 and 166 of the general area 106. Common information or the like for each encryption key is recorded in the second management file 172 of the authentication area 107, and individual information or the like for each encryption key is recorded in the second management file 173. However, this configuration is also strictly for the purpose of an example, and it may relative whether the information thereof is common information or individual information, and may not be absolute. For example, all of the information may be included in one of the second management files , or may be split into three or more second management files. Alternatively, it may be recorded in the different second management files for each of contents or each of certain groups of contents, or for each of encryption key entry numbers or each of certain groups of encryption key entry numbers.

In the contents storage folder 163, information indicating the contents files 167, 168, and 169 included therein is recorded. Contents data stored in the contents storage folder 163 are not necessarily limited to three, but there may be more than or less than three. In addition, although the contents data stored in the contents storage folder 164 are not shown, there may exist one or more contents data or no contents data at all therein.

Various kinds of multimedia contents data, for example information including moving image and speech information such as a movie, only moving image information, only speech information, static image information, information including both static image and speech information, character information, information including a plurality of them, and other various kinds of information are recorded in the contents files 167, 168, and 169 which are indicated by the information recorded in this contents storage folder 163 as described above.

When the contents data stored in the contents storage folder is encrypted, a key for decrypting encrypted data is recorded in the second management file in the authentication area 107. Then, information indicating the second management file is recorded and stored in the first management file in the general area 106. When existence of the encrypted data is verified in various contents data, the encrypted data may be decrypted by tracing this information to read out the key. However, in order to access the authentication area 107, a predetermined authentication procedure is required.

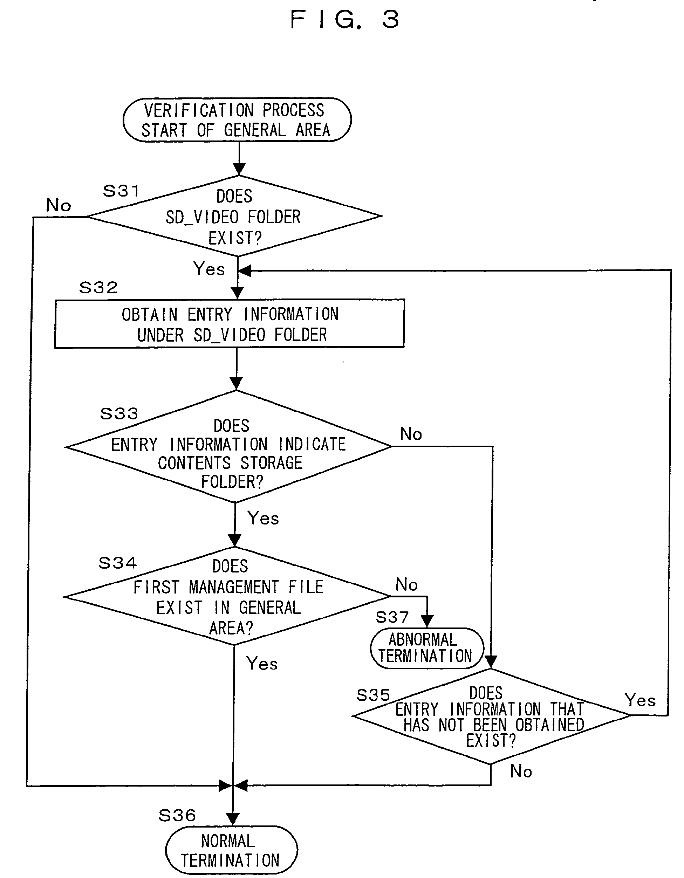

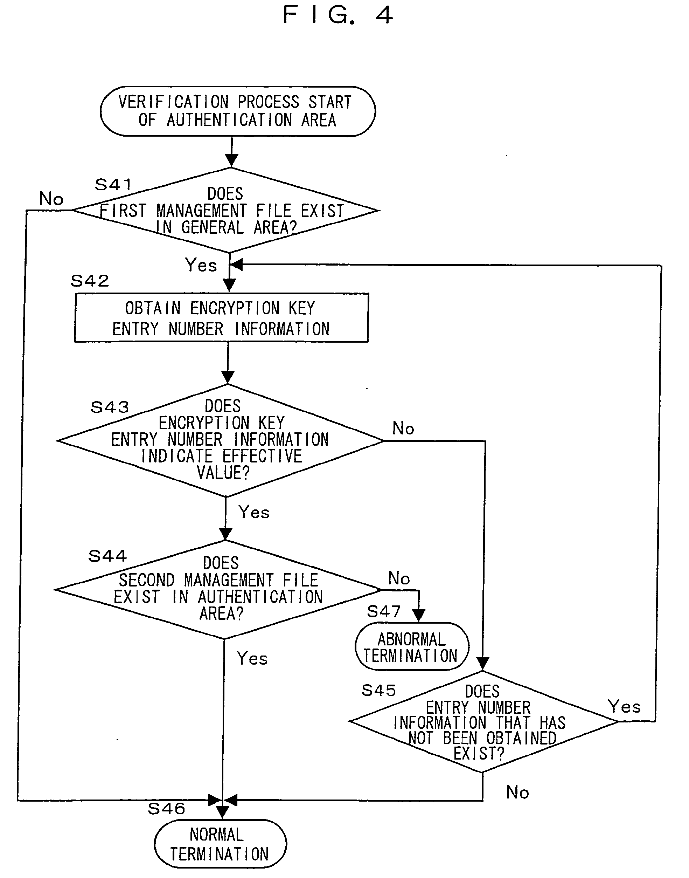

FIG. 3 and FIG. 4 are process flows for managing the file system structure in the memory card 101 of the above configuration, and verifying the validity. FIG. 3 shows a process flow mainly in the general area 106, and FIG. 4 shows a process flow mainly in the authentication area 107. These processes are not performed separately and independently, but performed cooperatively and integrally. Therefore, each process is not isolated completely, but the validity is totally managed and verified in a state where the general area 106 and the authentication area 107 are cooperative and integral.

First, when the mobile phone unit 102 is equipped with the memory card 101, or when a power supply of the mobile phone unit 102 is turned on, a process for managing and verifying the file structure management system of the general area 106 is started at first.

At first, at step S31, it is verified whether or not the SD_VIDEO folder exists in the general area 106. When the SD_VIDEO folder does not exist, it is judged that no information on the video is recorded in this memory card 101, so that the validity verification process of the file structure management system is normally terminated (step S36). On the other hand, when the SD_VIDEO folder exists, the flow proceeds to step S32 and entry information to various folders which exist under the SD_VIDEO folder is obtained. This entry information is the information for indicating various folders which exist under this SD_VIDEO folder, and is the information currently recorded in this SD_VIDEO folder.

When the entry information indicates the contents storage folder, the flow proceeds to step S34, and it is verified whether or not the first management file exists in the general area 106. When the first management file does not exist in the general area 106, the validity of this file structure management system is denied, so that the validity verification process is abnormally terminated (step S37). Then, there is performed a process for notifying abnormality such that a certain warning message is displayed on a screen of the mobile phone unit 102, some other processes for notifying the abnormality, or a disabling process.

On the other hand, when the first management file exists in the general area 106, the validity of this file structure management system is acknowledged, and the validity verification process is normally terminated (step S36) .

In addition, in a judgment at step S33, when the entry information does not indicate the contents storage folder, the flow proceeds to step S35, and it is verified whether or not the entry information that has not been obtained is left in the SD_VIDEO folder. When the entry information that has not been obtained is not left any more, the validity verification process is normally terminated (step S36) , and when the entry information that has not been obtained is left, the flow returns to step S32 , and a step for obtaining next entry information is performed.

This process is repeated until the entry information that has not been obtained is not left, or the entry information to the contents storage folder is detected at some midpoint thereof, so that the validity of the file structure management system of the general area 106 in the memory card 101 is verified.

Next, a validity verification of the file structure management system of the authentication area 107 in the memory card 101 is performed. Description will be made according to the flow chart shown in FIG. 4.

At first, at step S41, it is verified whether or not the first management file exists in the general area 106. When the first management file does not exist, it is judged that no available contents data is recorded in this memory card 101, so that the validity verification process is normally terminated (step S46).

On the other hand, when the first management file exists in the general area 106, the flow proceeds to step S42, and entry number information to an encryption key which exists in the first management file is obtained. This entry number information is the information indicating the second management file where the encryption key which exists in the authentication area 107 is recorded, and is recorded in the first management file in the general area 106.

When the entry number information to the encryption key exists and its value indicates an available value, the flow proceeds to step S44, and it is verified whether or not the second management file exists in the authentication area 107 which records the encryption key. When the second management file does not exist in the authentication area 107 , the validity of this file structure management system is denied, so that the validity verification process is abnormally terminated (step S47). Then, there is performed a process for notifying abnormality such that a certain warning message is displayed on a screen of the mobile phone unit 102, some other processes for notifying the abnormality, or a disabling process. On the other hand, when the second management file exists in the authentication area 107, the validity of this file structure management system is acknowledged, so that the validity verification process is normally terminated (step S46).

In a judgment at step S43, when the entry number information to the encryption key does not indicate an available value, the flow proceeds to step S45, and it is verified whether or not the entry number information to the encryption key that has not been obtained is left in the first management file of the general area 106. Then, when the entry number information to the encryption key that has not been obtained is not left, the validity verification process is normally terminated (step S46), and when the entry number information to the encryption key that has not been obtained is left, the flow returns to step S42, and moves to a step for obtaining next encryption key entry number information.

This process is repeated until the encryption key entry number information that has not been obtained is not left, or available encryption key entry number information is detected at some midpoint thereof, so that the validity of the file structure management system of the authentication area 107 in the memory card 101 is verified.

By doing this, the validity of the file structure management system of both of the general area 106 and the authentication area 107 in the whole memory card 101 may be verified not independently but totally in a cooperative and integral state.

In the above embodiment, description has been made of a method of verifying the validity of the whole memory card, when the memory card is equipped, or the power supply is turned on. However, a file structure verification process only for an entry which is a subject of a process may be performed just before actually performing a certain process, for example a reproduction process or the like. In such a case, the above embodiment and its modification are also applicable thereto with ease by means of configuring so as not to perform the process to the folder of all entries, but to perform the process to the folder of a predetermined entry instead of that.

### (First modification of the first embodiment)

Next, description will be made of a first modification of the first embodiment. As a number of portions of the first modification are the same as those of the first embodiment, description on the same portions will be omitted, and only portions different from those will be described.

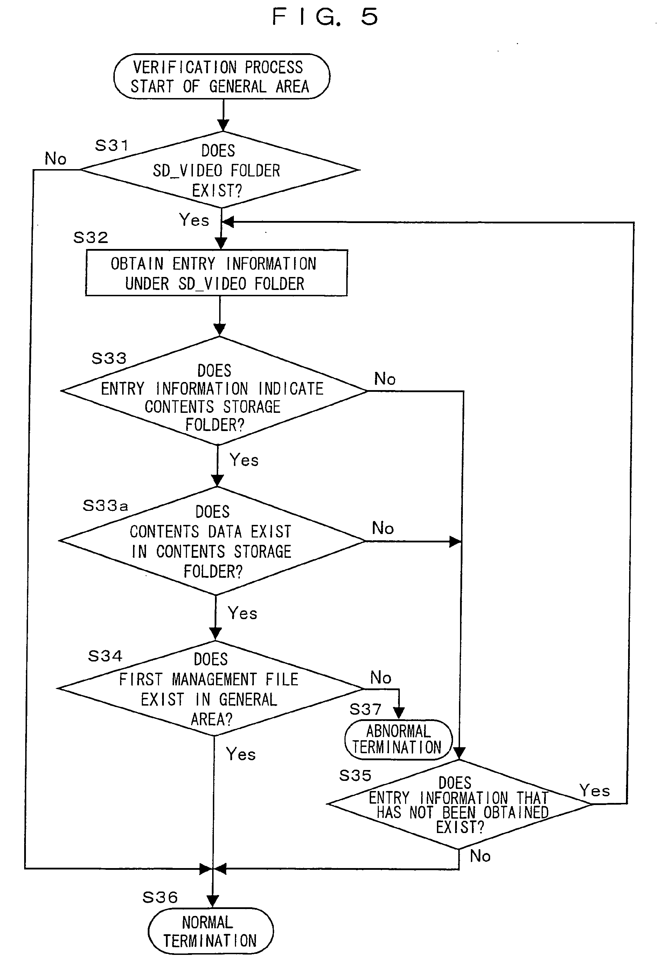

FIG. 5 shows a validity verification process flow of the file structure management system in the first modification. FIG. 4 will also be employed for assistance.

FIG. 5 is different from FIG. 3 in only step S33a. At step S33a, it is verified whether or not the contents data actually exist in the contents storage folder verified based on the entry information.

That is, in the first embodiment, the entry information to the various folders which exist under the SD_VIDEO folder is obtained (step S32), it is verified that this entry information indicates the contents storage folder (step S33) , and it is then verified that the first management file exists in the general area 106 (step 34). In contrast to this, in the first modification, the entry information to the various folders which exist under the SD_VIDEO folder is obtained (step S32) , it is verified that this entry information indicates the contents storage folder (step S33), it is then verified that the contents data actually exist in the contents storage folder (step S33a). Subsequently, it is verified that the first management file exists in the general area 106 (step S34).

Thus, not only the existence of the contents storage folder but also the actual existence of the contents data thereunder are further verified, so that load and time taken for the process are increased, but that makes it possible to perform further detailed verification.

In summary, it may be referred to as follows.

A method of managing the file structure in the memory card in the first modification includes the steps of:
verifying whether or not a contents storage folder exists in a general area of a memory card which is generally accessible;
verifying whether or not the contents data exists in said contents storage folder, when existence of said contents storage folder is verified;
verifying whether or not the first management file exists, when existence of said contents data is verified;
verifying whether or not available information on an encryption key stored in said first management file exists, when existence of said first management file is verified; and
verifying whether or not a second management file exists in an authentication area which requires an authentication process for accessing a memory, when existence of the available information on said encryption key is verified.

According to this, not only the existence of the contents storage folder is verified, but also it is further verified whether or not the contents data actually exists thereunder.

In summary, the procedure will be [verification of the contents storage folder in the general area->verification of the contents data->verification of the first management file->verification of the available information on the encryption key] -> [verification of the second management file based on the available information on the encryption key in the authentication area]. Also in this case, it becomes possible to integrally and cooperatively manage the authentication area for managing the security of the memory card and the general area other than that to verify the validity. It is therefore possible to individually store the encrypted data and the contents encryption key in individual areas to cooperatively manage them, thereby making it possible to improve the security. In addition to that, it is verified that the contents data actually exists under the contents storage folder, so that load and time taken for the process are increased, but that makes it possible to perform further detailed verification.

### (Second modification of the first embodiment)

Next, description will be made of a second modification of the first embodiment. As a number of portions of the second modification are the same as those of the first embodiment, description on the same portions will be omitted, and only portions different from those will be described.

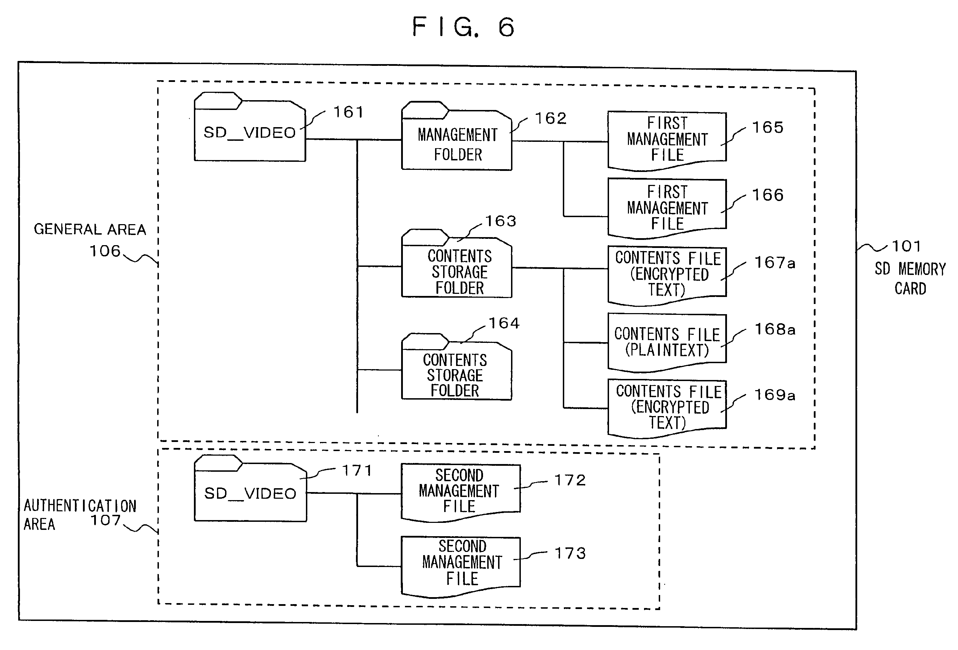

FIG. 6 shows a schematic diagram of a file structure management system of the second modification. A step in FIG. 6 different from that in FIG. 2 is to judge whether each of contents files 167a, 168a, and 169a stored in the contents storage folder 163 is the encrypted data or it is plaintext contents data which is not encrypted (It is hereafter written as plaintext data.). Preferably, this judgment will be performed with an easy manner as much as possible, and it is particularly preferable to be able to judge without opening and seeing the contents data. For that reason, for example, it is judged whether it is the encrypted data or the plaintext data by an extension given to a file name. However, it may be judged whether it is the encrypted data or the plaintext data by another certain manner.

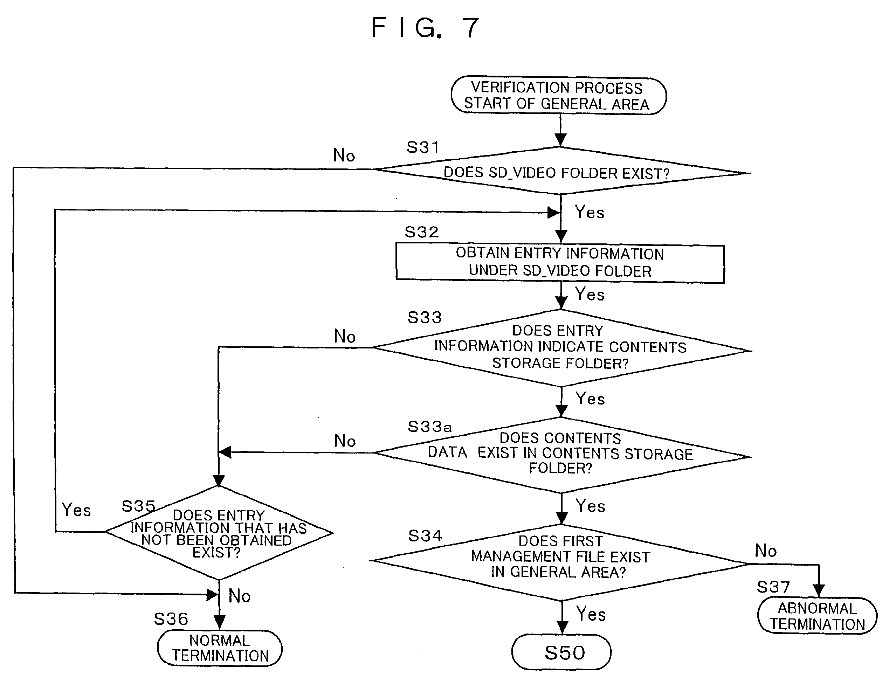

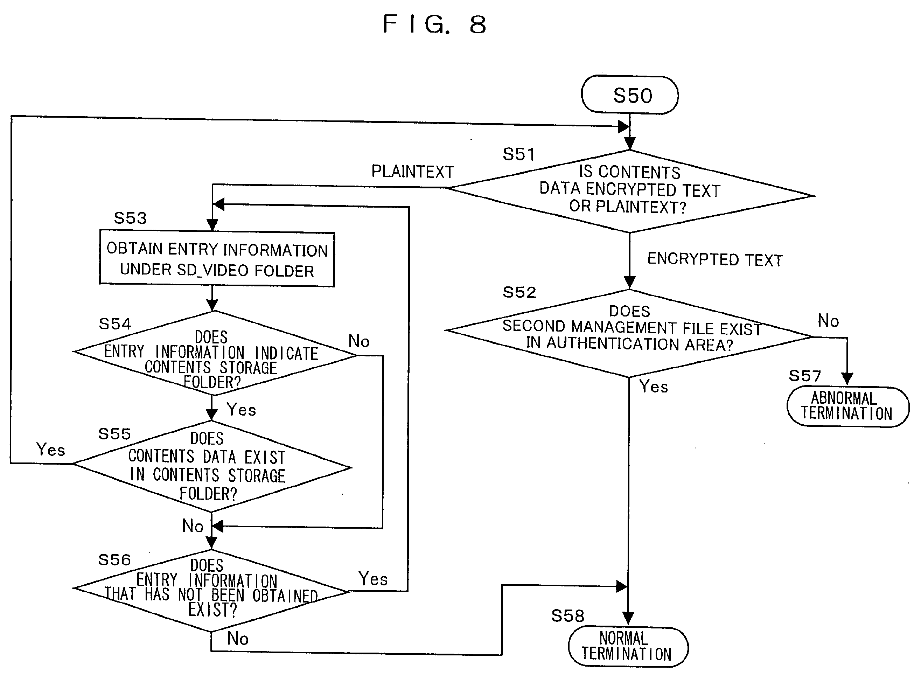

FIG. 7 and FIG. 8 show validity verification process flows of the file structure management system in the second modification. FIG. 7 shows a process flow in the general area 106, and is not substantially different from the process of FIG. 5.

It is the process flow of FIG. 8 that the second modification is substantially different from the first modification. The entry information of the SD_VIDEO folder indicates the contents storage folder (Yes at step S33), and the contents data exists in the contents storage folder (Yes at step S33a) , and moreover, when the first management file exists in the general area 106 (Yes at step S34) , the process is moved to step S50 of FIG. 8.

At step S51, it is verified whether the contents data is the encrypted data or the plaintext data. Preferably, this judgment will be performed with a simple manner as much as possible, and for example, it is particularly preferable to be judged by an extension attached to a file name. Another easy manner may be used.

When the contents data is the encrypted data, the flow proceeds to step S52, and it is verified that the second management file exists in the authentication area 107. When the second management file does not exist therein, it is judged to be abnormal (step S57), and when it exists therein, it is judged to be normal (step S58), so that verification of the validity verification process is then terminated.

When the contents data which exists in the contents storage folder is the plaintext data, the flow proceeds to step S53, and next entry information will be obtained from the SD_VIDEO folder. Then, the flow proceeds to step S54, and in the matter similar to the above, it is judged whether or not this entry information indicates the contents storage folder. When the entry information indicates the contents storage folder, the flow proceeds to step S55, and in the matter similar to step S33a, it is judged whether or not the contents data exists in the contents storage folder. When the contents data exists therein, the flow returns to step S51, and it is judged whether this contents data is the encrypted data or the plaintext data.

On the other hand, when the entry information does not indicate the contents storage folder at step S54, or when the contents data do not exist in the contents storage folder at step S55, the flow proceeds to step S56, and it is judged whether or not the entry information that has not been obtained is left in the SD_VIDEO folder. When the entry information that has not been obtained is left in the SD_VIDEO folder, the flow returns to step S53, and next entry information will be obtained.

When all of the entry information has already been obtained, and the entry information that has not been obtained is not left, the validity verification process is normally terminated (step S58).

In summary, it may be referred to as follows.

A method of managing the file structure in the memory card in the second modification includes the steps of:
verifying whether or not the contents storage folder exists in the general area of the memory card which is generally accessible;
verifying whether or not the contents data exists in said contents storage folder, when existence of said contents storage folder is verified;
verifying whether or not the first management file exists, when existence of said contents data is verified;
judging whether or not said contents data whose existence has been verified is encrypted; and
verifying whether or not the second management file exists in the authentication area which requires the authentication process for accessing the memory, when said contents data is judged to have been encrypted.

At first, it is verified whether or not the contents storage folder for storing the contents data exists in the general area, and after verifying the existence of the contents storage folder, it is further verified that the contents data actually exists thereunder. After verifying the existence of the contents data, it is verified whether or not the first management file exists therein. When the existence of the first management file is verified, it is verified whether or not the contents data is encrypted, and then when it is encrypted, it is verified whether or not the second management file for storing the encryption key exists in the authentication area.

In summary, the procedure will be [verification of the contents storage folder in the general area->verification of the contents data->verification of the first management file-> judgment of the encryption of the contents data]->[verification of the second management file in the authentication area] . Also in this case, it becomes possible to integrally and cooperatively manage the authentication area for managing the security of the memory card and the general area other than that to verify the validity. It is therefore possible to individually store the encrypted data and the contents encryption key in individual areas to cooperatively manage them, thereby making it possible to improve the security. In addition, it is verified that the contents data actually exists under the contents storage folder, so that load and time taken for the process are increased, but that makes it possible to perform further detailed verification. In addition to that, since the process can be proceeded after judging whether the contents data is the encrypted data or the plaintext data which is not encrypted, efficiency of the process can be increased. The judgment whether or not the contents data is encrypted is made based on, for example an extension given to a file name, so that it is not necessary to open and see the contents data, thereby making it possible to judge easily.

### (Third modification of the first embodiment)

Next, description will be made of a third modification of the first embodiment. As a number of portions of the third modification are the same as those of the second modification, description on the same portions will be omitted, and only portions different from those will be described.

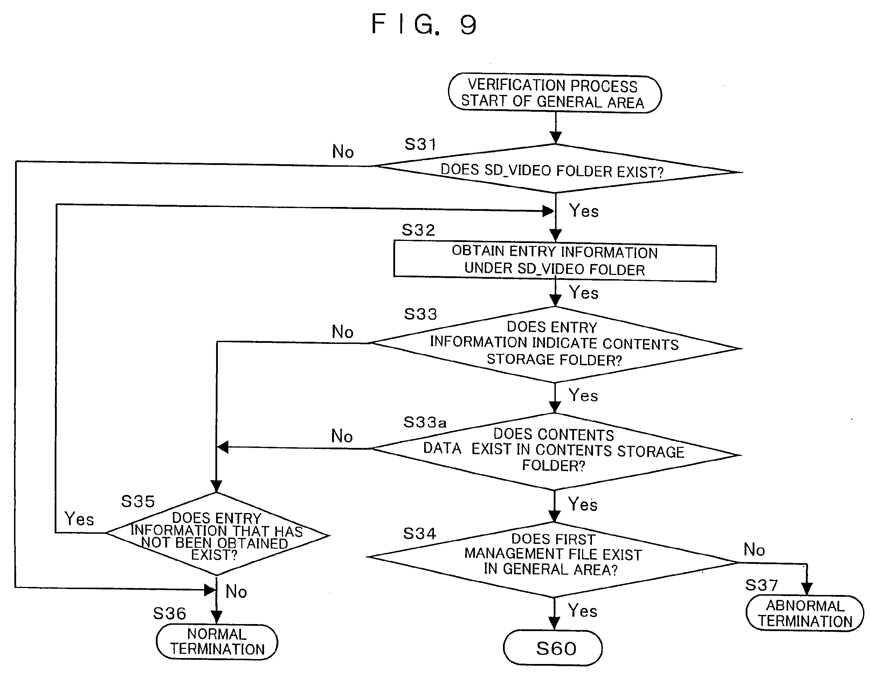

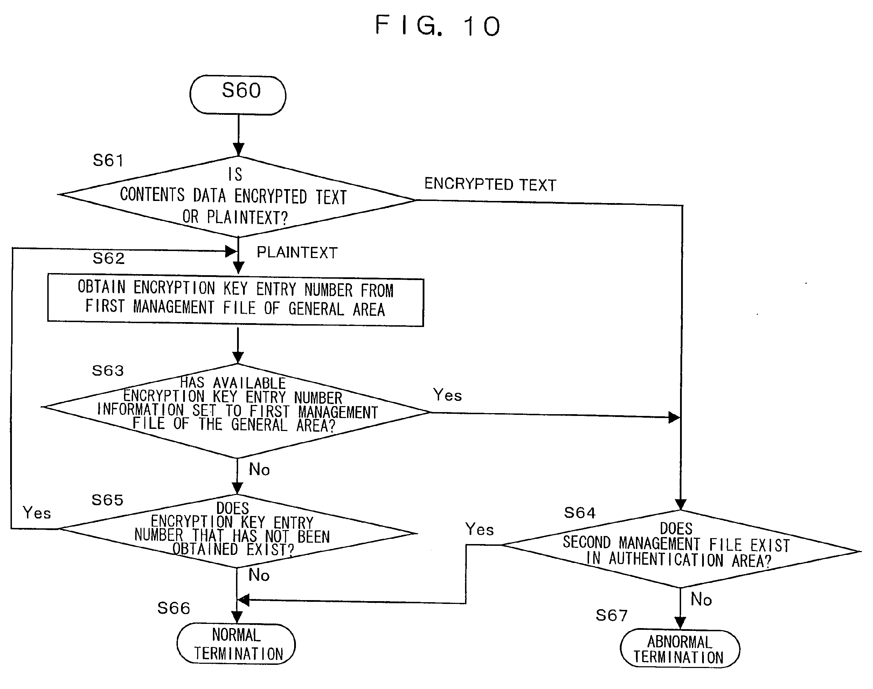

FIG. 9 and FIG. 10 show validity verification process flows of the file structure management system in the third modification. FIG. 9 is a process flow in the general area 106, and is not substantially different from the process of FIG. 7. It is the process flow of FIG. 10 that the third modification is substantially different from the first modification.

In a judgment at step S61, when the contents data stored in the contents storage folder is the plaintext data, the flow proceeds to step S62, and the encryption key entry number information is obtained from the first management file which exists in the general area 106, and at step S63, it is judged whether or not an available value is set in the encryption key entry number information.

Then, when the available encryption key entry number information is set, the flow proceeds to step S64, it is judged whether or not the second management file exists in the authentication area 107. When it exists therein, the validity verification process is normally terminated (step S66), but when it does not exist therein, the validity verification process is abnormally terminated (step S67).

On the other hand, when the available encryption key entry number information is not set, the flow proceeds to step S65, it is judged whether or not the encryption key entry number information that has not been obtained is left in the first management file which exists in the general area 106. When all of the encryption key entry number information has already been obtained, and the encryption key entry number information is not left, the validity verification process is normally terminated (step S66). On the other hand, when the encryption key entry number information that has not been obtained is left, the flow returns to step S62, the encryption key entry number information is obtained again from the first management file which exists in the general area 106, and it is judged whether or not the available value is set in the encryption key entry number information (step S63).

This process is repeated until the encryption key entry number information that has not been obtained is not left in the first management file, or it is detected that available encryption key entry number information is set at some midpoint, so that the validity verification process is normally terminated (step S66), or it is abnormally terminated (step S67) .

In summary, it may be referred to as follows.

A method of managing the file structure in the memory card in third modification includes the steps of:
verifying whether or not the contents storage folder exists in the general area of the memory card which is generally accessible;
verifying whether or not the contents data exists in said contents storage folder, when existence of said contents storage folder is verified;
verifying whether or not the first management file exists, when existence of said contents data is verified;
judging whether or not said contents data whose existence has been verified is encrypted;
verifying whether or not the second management file exists in the authentication area which requires the authentication process for accessing the memory, when said contents data is judged to have been encrypted;
verifying whether or not available information on the encryption key stored in said first management file exists, when said contents data is judged not to have been encrypted; and
verifying whether or not the second management file exists in the authentication area which requires the authentication process for accessing the memory, when existence of the available information on said encryption key is verified.

This , in a method of managing the file structure of above second modification, verifies whether or not the available information on the encryption key exists in the first management file, when the contents data whose existence has been verified is the plaintext data that is not encrypted. In other words, information which indicates whether or not the available information on the encryption key of the contents data exists in any second management file in the authentication area is verified. Then, it is verified whether or not the second management file for storing the encryption key exists in the authentication area.

In summary, the procedure will be [verification of the contents storage folder in the general area->verification of the contents data->verification of the first management file->judgment of the encryption of the contents data]-> [at the time of encryption : verification of the second management file in the authentication area ] [at the time of non-encryption : verification of the available information on the encryption key->verification of the second management file based on the available information on the encryption key in the authentication area]. Also in this case, it becomes possible to integrally and cooperatively manage the authentication area for managing the security of the memory card and the general area other than that to verify the validity. It is therefore possible to individually store the encrypted data and the contents encryption key in individual areas to cooperatively manage them, thereby making it possible to improve the security. In addition, it is verified that the contents data actually exists under the contents storage folder, so that load and time taken for the process are increased, but that makes it possible to perform further detailed verification. In addition, since the process can be proceeded after judging whether the contents data is the encrypted data or the plaintext data which is not encrypted, efficiency of the process can be increased. Then, even when it is supposed to be the plaintext data, since the second management file in the authentication area is verified based on the available information on the encryption key in the contents storage folder, accuracy of the process can be expected.

### (Second embodiment)

In the first embodiment of the present invention, verification of whether or not the contents storage folder exists in the general area has been made a starting point, but in a second embodiment of the present invention, verification of whether or not the first management file exists in the general area is made a starting point. Hereinafter, description will be made of a method of managing a file structure in a memory card of the second embodiment.

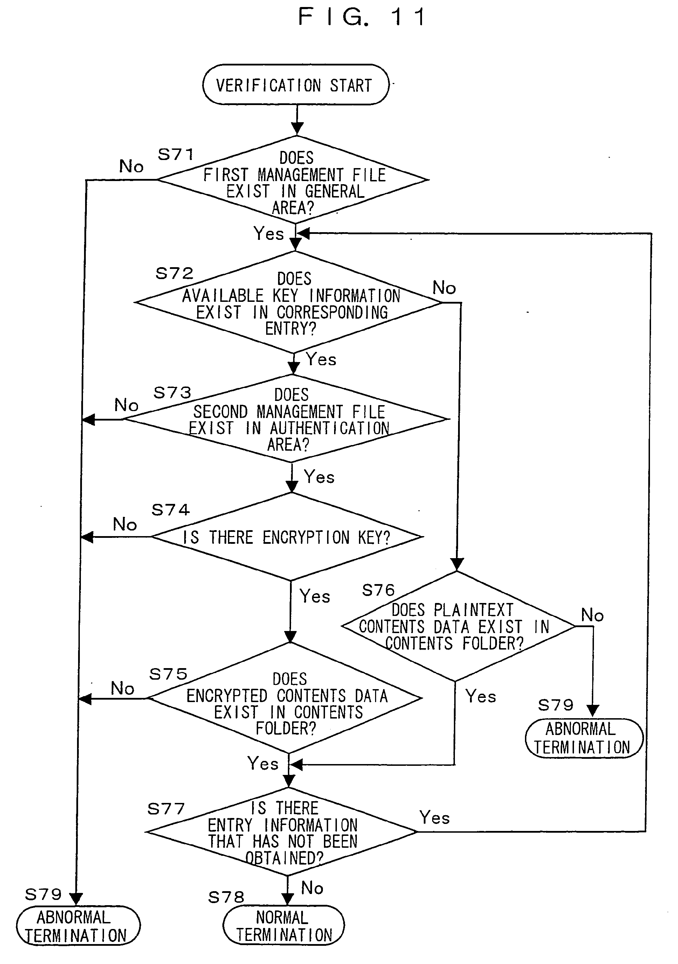

FIG. 11 shows a validity verification process flow of a file structure management system in the second embodiment of the present invention. FIG. 1 and FIG. 2 are employed for assistance.

At first, when the mobile phone unit 102 is equipped with the memory card 101, and encrypted data is reproduced and moved onto the memory card 101, a process for managing and verifying the file structure management system of the general area 106 is first started.

First, at step S71, it is verified whether or not the first management file which manages all Video program information in the memory card exists under the SD_VIDEO folder 161 of the general area 106 by the controller 104 of the mobile phone unit 102. This process corresponds to verification of whether or not the SD_VIDEO folder exists and verification of whether or not the management file exists in the general area (steps S31 and S34) in the third modification of the first embodiment (FIG. 9).

When there is no SD_VIDEO folder, or the first management file does not exist, there will be no Video program managed in the SD memory card, so that the validity of this file structure management system is denied, and the validity verification process is abnormally terminated (step S79). Then, a process for notifying abnormality such that a certain warning message is displayed on a screen of the mobile phone unit 102 is performed.

On the other hand, when it is judged the first management file exists at step S71, the flow proceeds to step S72, and it is verified whether or not available contents encryption key number information is set for an entry of corresponding contents among pieces of the Video program information managed in the management file.

When there is no available contents encryption key number information in the first management file, it is considered that the corresponding contents data is not the encrypted data but the plaintext data. Then, the flow proceeds to step S76, and existence of the plaintext data in the contents storage folder is verified. This process corresponds to step S32 (obtaining the entry information from the SD_VIDEO folder) in the third modification (FIG. 9) of the first embodiment, step S33 (verification of whether or not the entry information indicates the contents storage folder) , and step S34 (verification of whether or not the contents data exist in the contents storage folder) . Incidentally, step S76 does not necessarily need to correspond to said all three steps, but may be configured so that verification of whether or not the contents actually exist in the contents storage folder is not performed, for example like the first embodiment.

When the plaintext data exist, the validity of this file structure management system is acknowledged, and the validity verification process is normally terminated (step S78) , so that it becomes possible to continuously perform a process of reproduction, movement, or the like of the contents data on the mobile phone unit 102. On the other hand, when the contents data do not exist, a process for notifying abnormality such that a certain warning is displayed on a screen of the mobile phone unit 102 is performed.

When there exists the available key information in the first management file in judgment at step S72, the flow proceeds to step S73 , and the mobile phone unit 102 performs an authentication process with the memory card 101, so that it is verified whether or not an encryption key of the encrypted data, and the second management file with contents right information exist under the SD_VIDEO folder in the authentication area.

When the second management file does not exist, it means that all encryption keys of the Video programs in the authentication area cannot be found, the validity of this file structure management system is denied, and the validity verification process is abnormally terminated (step S79), so that a process for notifying abnormality such that a certain warning is displayed on a screen of the mobile phone unit 102 is performed.

On the other hand, when the second management file exists, the flow proceeds to step S74, and it is verified whether or not an available encryption key is set for decrypting the encrypted data managed in the second management file. When the available encryption key does not exist in the second management file, the validity of this file structure management system is denied, and the validity verification process is abnormally terminated (step S79), so that a process for notifying abnormality such that a certain warning is displayed on a screen of the mobile phone unit 102 is performed.

On the other hand, when the available encryption key is set in the second management file, it means that the validity of the relationship between the encrypted data and a corresponding encryption key is verified. Next, the flow proceeds to step S75, and it is verified whether or not the contents storage folder indicated by the first management file, and the encrypted data in that folder actually exist. This process corresponds to step S33 (verification of the existence of the contents storage folder) in the third modification of the first embodiment (FIG. 9 and FIG. 10), step S33a (verification of the existence of the contents data) , and step S61 (verification of the encrypted text and the plaintext of the contents).

When the encrypted data do not exist at all in the contents storage folder, the validity of this file structure management system is denied, and the validity verification process is abnormally terminated (step S79) , so that a process for notifying abnormality such that a certain warning is displayed on a screen of the mobile phone unit 102 is performed.

On the other hand, when the encrypted data exist in the contents storage folder, the flow proceeds to step S77, and it is judged whether or not there exists any entry information that is managed by the first management file and has not been obtained, and when there is no entry information left already that has not been obtained, in other words, when the file system structure verification process for all entries that have been obtained is normal, the validity of this file structure management system is acknowledged, so that the validity verification process is normally terminated (step S78).

When the entry that has not been obtained still exists, the flow will return to step S72 (process for verifying whether or not any key information is available to the corresponding entry), and above file structure verification process is repeated as many times as the un-obtained number of the entry information managed by the first management file.

According to this embodiment, the encrypted data whose validity of the file structure management system is verified based on the above process flow is decrypted using a corresponding encryption key obtained from the second management file, so that it becomes possible to obtain the accurate plaintext data. Consequently, it becomes possible to securely perform a process of reproduction or the like of the contents data on the mobile phone unit 102.

In the above embodiment, description has been made of a method of verifying the validity of the whole memory card, when the memory card is equipped, or the power supply is turned on. However, a file structure verification process only for an entry which is a subject of a process may be performed just before actually performing a certain process, for example the reproduction process or the like. In such a case, the above embodiment and its modification are also applicable with ease by performing the process not to the folder of all entries, but to the folder of a predetermined entry.

### (Modification (A) of the second embodiment)

Then, description will be made of a method of managing the file structure in the memory card in a modification (A) of the second embodiment. In the modification (A), only portions different from those of the second embodiment will be described.

In the above first embodiment and its modification, and the second embodiment, even when the validity is denied, there may be a case where no actual problem occurs. For example, in a case where the validity verification is performed only to a predetermined folder, when the first management file and the second management file exist properly, but there is no contents data in the contents folder in spite of the existence of the available encryption key, it may be considered that there is no problem in validity. However, if the contents data verification is first performed such as the first embodiment, it will be judged to be abnormal in that stage and the process will be completed.

Unlike the first embodiment, in the second embodiment, a verification process of the contents data considered to have few actual problems is brought to the last step. In other words , the contents data is verified in a stage where the validity is almost acknowledged. For this reason, when the contents data do not exist, recovery becomes possible by performing a re-obtaining process of the contents data , or the like.

In the modification (A) of the second embodiment of the present invention, description will be made of a recovery method in detail by taking an example of a case where the validity verification is performed to a folder of a predetermined entry.

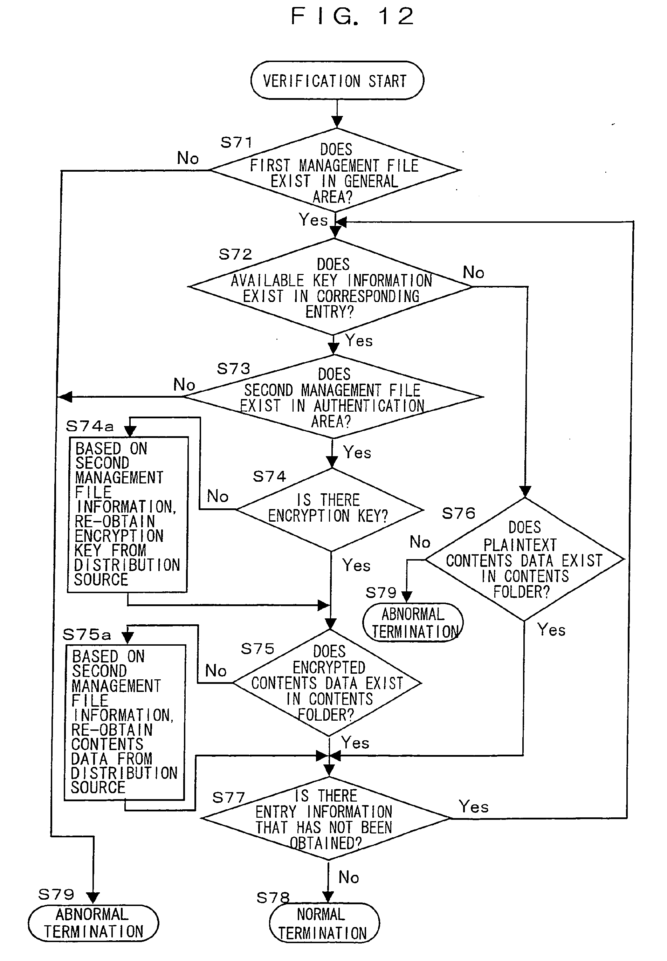

Based on FIG. 12, description will be made of a process flow which manages the file system structure in the memory card 101 in the modification (A), and performs a process against abnormality occurrences.

Steps S71 through S75 are similar to those of FIG. 11 in the case of the second embodiment. Both step S74a and step S75a are different therefrom.

Abnormality occurrences assumed in this embodiment are abnormalities occurred when verifying the validity of the file structure management system in the second embodiment, and following two cases are assumed.

They are a case where the available encryption key of the contents data is not set in spite of the existence of the second management file, and a case where the contents file itself does not exist in the contents storage folder in spite of the existence of the available encryption key.

Since the second management file exists in the authentication area 107, a recovery method of re-obtaining following encrypted data can be achieved for either cases, irrespective of the former and the latter.

When the second management file exists, it is verified whether or not the available encryption key is set for decrypting the encrypted data managed in the second management file at step S74, and when the available encryption key does not exist in the second management file at that time, the flow proceeds to step S74a. At step S74a, the contents encryption key information is again obtained from a server of a distribution source based on contents purchase history information stored in the second management file.

In addition, when the available encryption key is set, it is verified whether or not the contents storage folder indicated by the first management file, and the encrypted data in the folder actually exist at step S75, and when the encrypted data do not exist at all in the contents storage folder at this time, the flow proceeds to step S75a. At step S75a, the encrypted data is again obtained from the server of the distribution source based on the contents purchase history information stored in the second management file.

Based on the second management file, a re-verification process is performed between a network server which has originally obtained the contents data, and the SD memory card. Herein, although it is described as the network server, an information terminal in a convenience store, media such as hard disk and CD-ROM, and others may be satisfactorily used as far as a terminal, a route, and a medium from which users can obtain the contents data.

When the re-verification process is established, it is verified that an SD memory card owner is a legal owner of the contents data based on the contents purchase history information stored in the second management file, and when the validity is verified, the server side creates and redistributes the encrypted data and the contents encryption key information again. In a case of the latter, since the encryption key information exists in the SD memory card, it is also possible to perform a process for sending the key information to the server, and re-encrypting the contents data at the server side using the key to re-distribute.

According to these processes, if the SD memory card suddenly falls into a shortage in capacity, it becomes possible to improve a user' s convenience such as deleting the contents data of the general area for the time being, performing re-authentication as required, and obtaining the contents data again.

In summary, it may be referred to as follows.

A method of managing the file structure in the memory card in the modification (A) includes the steps of:
when abnormalities in consistency between the encryption key and the encrypted data occur in spite the existence of the second management file,
verifying whether or not the contents purchase history information exists in said second management file information;
re-accessing an area where a contents right owner defines, when the existence of said contents purchase history information is verified;
verifying whether or not a contents property right exists in said second management file based on said contents purchase history information, when said access is established securely;
re-obtaining both or either the contents data and/or the key information encrypted with the same key as a previous key or a key different from that, when it is verified to be a legal owner of said contents data; and
resetting the encrypted data and the key information obtained by said process within a suitable folder or a field where those should originally exist from said second management file.

If the contents data verification is first performed such as the second method of managing the file structure, it will be judged to be abnormal in that stage, and the process will be completed. However, even when the contents data do not exist, in a stage where the validity is mostly acknowledged, the recovery is possible by performing a re-obtaining process of the contents or the like.

That is, when
[verification of the first management file in the general area->verification of the available information on the encryption key] -> [verification of the second management file based on the available information on the encryption key in the authentication area->verification of the encryption key] -> [verification of the encrypted data in the contents storage folder in the general area->inconsistency occurrence between the encryption key and the encrypted data]
occurs,
[verification of the contents purchase history information in the second management file] -> [re-access to the area which the contents right owner defines based on the contents purchase history information->authentication of the contents property right->re-obtaining the encrypted data / key information->resetting the encrypted data/key information to the suitable folder/field where they should originally exist] is performed.

According to this, it becomes possible to recover a state of the memory card to a normal state from an abnormal state.

### (Modification (B) of the second embodiment)

Next, description will be made of a method of managing the file structure in the memory card in a modification (B) of the second embodiment. In this modification (B), only portions different from those of the first embodiment will be described. In the modification (B) , description will be made taking an example of a case where a verification process for only a folder of a predetermined entry is performed in the matter similar to the first modification.

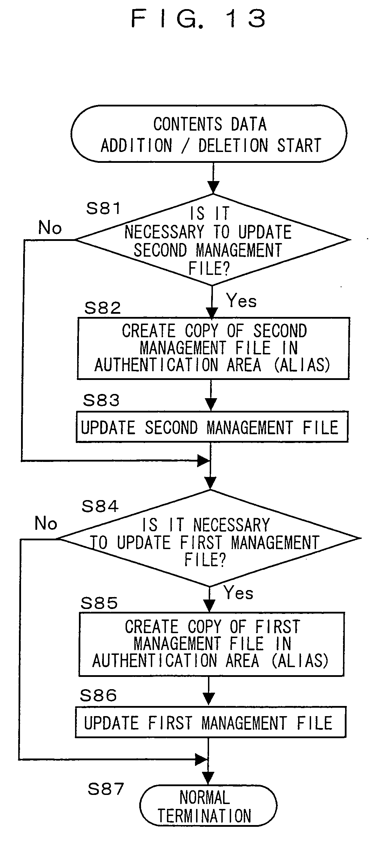

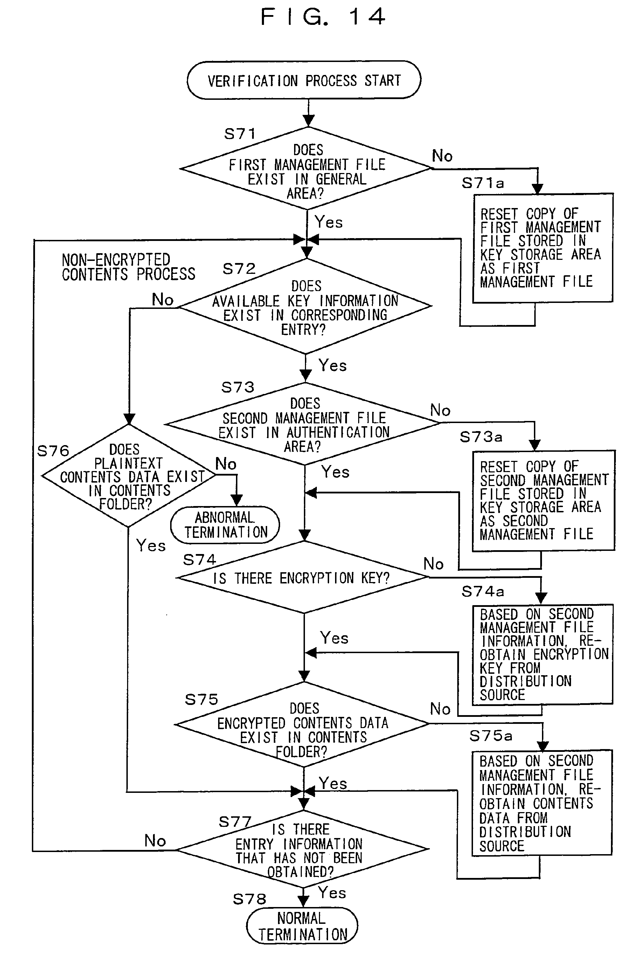

An example of a process for adding and deleting the contents data is shown in FIG. 13 when the file system structure in the SD memory card is normal. A flow chart which manages the file system structure in the SD memory card in the modification (B) , and performs a process against abnormality occurrences is shown in FIG. 14.

First, based on FIG. 13, description will be made of the process for adding and deleting the contents data and the management information to and from the SD memory card after verifying normality of the file structure management system in the SD memory card.

When the contents data is added or deleted, in order to store a key which has encrypted the contents data in the second management file or to delete it from the second management file, it is verified whether or not it is necessary to update the second management file at step S81. When it is not necessary to update, the flow proceeds to step S84 with performing no process at all. When it is necessary to update, the flow proceeds to step S82, after copying the second management file, it is re-named and stored in the authentication area. Subsequently, the second management file is updated at step S83.

Similarly, for the first management file, when the contents data is added or deleted, in order to store key number information which has encrypted the contents data in the first management file or to delete it from the first management file, it is verified whether or not it is necessary to update the first management file at step S84. No process will be performed when it is not necessary to update. When it is necessary to update, the flow proceeds to step S85, after copying the first management file, it is re-named and stored in either of the authentication area or the general area. Subsequently, the first management file is updated at step S86.

Considering the above process, abnormality occurrences assumed in this embodiment are abnormalities occurred when verifying the validity of the file structure management system in the second embodiment, and following two cases are assumed. In FIG. 14, steps S71 through S75, step S74a, and step S75a are similar to those of FIG. 12 in the modification (A) . Both step S71a and step S73a are different therefrom.

They are a case where this first management file itself does not exist, and a case where the second management file itself does not exist.

At step S71, it is verified whether or not the first management file exists, and when the first management file itself is not found in the SD memory card due to a certain abnormality at this time, it is verified whether or not there exists a copied first management file which is stored with an alias in the authentication area and the general area according to the above process in FIG. 13, and if the file is not found, the validity of this file structure management system is denied, and the validity verification process is abnormally terminated. Then, there is performed a process for notifying abnormality such that a certain warning message is displayed on a screen of the mobile phone unit 102, some other processes for notifying the abnormality, or a disabling process.

If the file is found, a name of the file is changed into the name similar to that of the first management file, and the file is copied again to an area where the first management file is stored at step S71a, so that it is possible to recover the first management file to a previous state by one. In terms of the copied file name which is set herein, it will be readily understood that it is not necessary to specify anything in particular as far as it is a file name whose copy source can be identified.

Next, in the case of the latter, when the second management file itself is not found in the SD memory card due to a certain abnormality, it is verified whether or not there exists a copied file which is stored with an alias in the authentication area according to the above process in FIG. 13, and if the file is not found, the validity of this file structure management system is denied, and the validity verification process is abnormally terminated. Then, there is performed a process for notifying abnormality such that a certain warning message is displayed on a screen of the mobile phone unit 102, some other processes for notifying the abnormality, or a disabling process.

If the file is found, a name of the file is changed into the name similar to that of the second management file, and the file is copied again to an area where the second management file is stored at step S73a, so that it is possible to recover the second management file to a previous state by one. In terms of the copied file name which is set herein, it will be readily understood that it is not necessary to specify anything in particular as far as it is a file name whose copy source can be identified.

In summary, it may be referred to as follows.

A method of managing the file structure in the memory card in the modification (B) includes the steps of:
when newly adding contents data or deleting existing contents data,
in a process of updating said first management file and said second management file,
creating a copy of said first management file as a different file name before updating said first management file;
updating information on said first management file after the copy of said first management file is correctly created;
creating a copy of said second management file as a different file name before updating said second management file; and
updating information on said second management file after the copy of said second management file is correctly created.

According to this, when the contents data is added to or deleted from the memory card, after verifying normality of the file structure management system in the memory card, addition and deletion of the first management file and the second management file are performed. A copy is created with a different file name to thereby avoid careless incorrect addition and incorrect deletion.

Moreover, in the above embodiment, it includes the steps of:
in an occurrence of an abnormal state where the existence of said first management file or said second management file has not been verified,
verifying whether or not a copy file of said first management file exists, when the existence of said first management file has not been verified;
re-naming said copy file to a formal first management file name newly, when the existence of the copy file of said first management file is verified;
verifying whether or not a copy file of said second management file exists, when the existence of said second management file has not been verified; and
re-naming said copy file to a formal second management file name newly, when the existence of the copy file of said second management file is verified.

According to this, it becomes possible to recover a state of the memory card to a normal state from an abnormal state. The file name is changed into a formal name to thereby avoid careless incorrect addition and incorrect deletion.

### (Modification (C) of the second embodiment)

Then, description will be made of a method of managing the file structure in the memory card in a modification (C) of the second embodiment. In the modification (C), only portions different from those of the modification (B) will be described. In the modification (C) , description will be made taking an example of a case where a verification process is performed to only a folder of a predetermined entry in the matter similar to first modification.

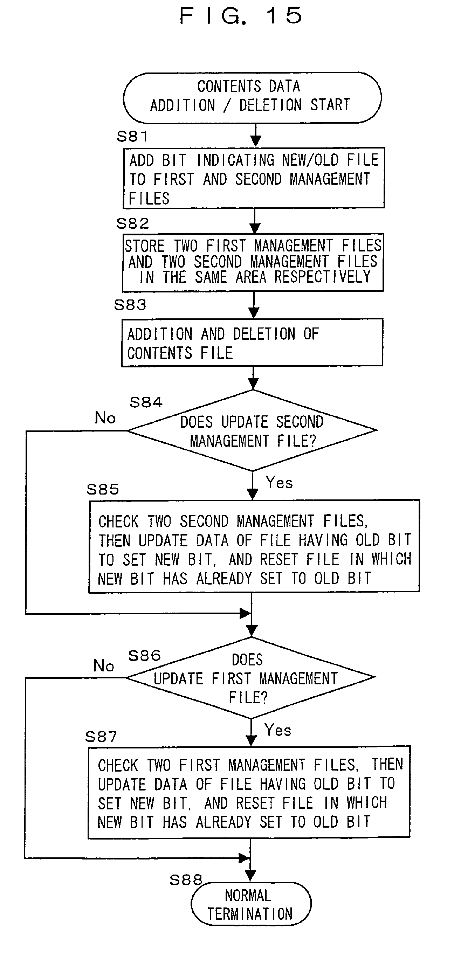

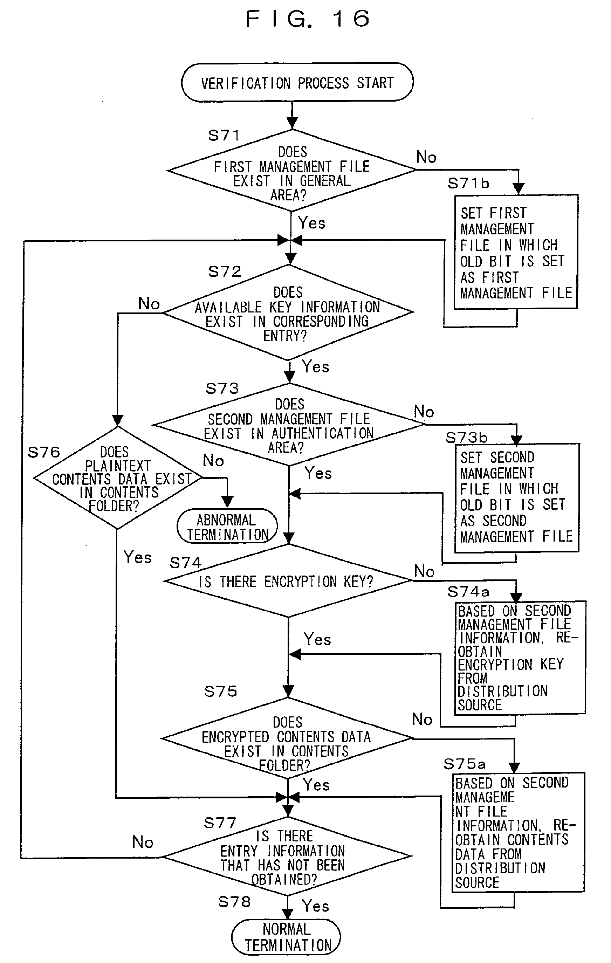

An example of a process for adding and deleting the contents data is shown in FIG. 15 in a case where the file system structure in the SD memory card is normal, and a flow chart which manages the file system structure in the SD memory card in the modification (C), and performs a process against abnormality occurrences is shown in FIG. 16.

First, based on FIG. 15, description will be made of the process for adding and deleting the contents data and the management information to and from the SD memory card after verifying normality of the file structure management system in the SD memory card.

When the contents data is added or deleted, a key number and an encryption key which have encrypted the contents data are added to or deleted from the first and the second management files. For that reason, it is verified whether or not it is necessary to update the first and second management files, and no process will be performed unless it is necessary to update them. On the other hand, when it is necessary to update them, after updating the files, when there are only one first management file and one second management file, files same as those are copied to and stored in the general area and the authentication area with aliases, respectively. This time, the same process will be performed for the first management file and the second management file, so that it becomes a common process, thereby description will be commonly made of the processes for both files in the following.

At step S81, single bit is added to two copied management files which are the same as the original management files, respectively, and a bit for distinguishing between a new file and an old file and for indicating whether or not the files are the most updated is set. As an update method of the management file in a case where there exist two management files to which new and old bits are set, the copy is not created each time like the modification (B), and the update method is performed as follows instead of that.

At first, it is verified whether the new bit is set to the two files or the old bit is set thereto, and when the old bit is set to either of the files, a file to which the old bit is set becomes a subject to update, and a file to which the new bit is set does not become a subject to update.

After updating the file to which the old bit is set, an area of the file after updating where the old bit is set is updated in the new bit, while the new bit of the file to which the new bit has been set so far is updated in the old bit (steps S85 and S87).

According to this process, when an abnormal state such that the new bit or the old bit is set to both files, or the like is detected in two files, the validity of this file structure management system is denied, so that the validity verification process is abnormally terminated. Then, there is performed a process for notifying abnormality such that a certain warning message is displayed on a screen of the mobile phone unit 102, some other processes for notifying the abnormality, or a disabling process.

Considering the above process, abnormality occurrences assumed in this embodiment are abnormalities occurred when verifying the validity of the file structure management system in the second embodiment, and following two cases are assumed.

They are a case where the first management file itself to which the new bit is set does not exist, and a case where the second management file itself to which the new bit is set does not exist.

Since the common process is applied to the former and the latter, description will be made using the second management file here, but it will be readily understood that the first management file is also similar to that.

When the second management file itself to which the new bit is set is not found in the SD memory card due to a certain abnormality, it is verified at step S73b whether or not the second management file to which the old bit is set is stored in the authentication area according to the above process in FIG. 15, and if the file is not found, the validity of this file structure management system is denied, and the validity verification process is abnormally terminated. Then, there is performed a process for notifying abnormality such that a certain warning message is displayed on a screen of the mobile phone unit 102, some other processes for notifying the abnormality, or a disabling process. If the file is found, setting of the new or old bit of that file is reset in the new bit from the old bit, so that the file to which the old bit has previously set is made as an available file.

It is therefore possible to recover the second management file to a previous state by one. In a process having the management file to be duplexed, a process for generating the copy of the file whenever the update of the file has occurred in the modification (B) becomes only a check process of the new and the old bit in the modification (C) , and it becomes possible to always update the old file, so that it becomes possible to achieve improvement in speed of the process as compared with the modification (B).

Here , although single bit of the new bit and the old bit is extended and assigned as indicating a new version and an old version of new and old identifiers, it is not necessary to be a single bit area in particular, and any manner may be applicable as far as it can set information to determine whether old or new, or valid or invalid.

In summary, it may be referred to as follows.

A method of managing the file structure in the memory card in the modification (C) includes the steps of:
when newly adding contents data or deleting existing contents data,
in a process of updating said first management file and said second management file,
copying said first management file to be duplexed, when new and old identifiers have not been set in said first management file ;
setting said new and old identifiers to each file in said two first management files;
updating the old version to the new version of said new and old identifiers after updating a file to which the old version of said new and old identifiers has been set;
updating the new version to the old version of said new and old identifiers after updating the file to which the old version of said new and old identifiers has been set;
copying said second management file to be duplexed, when the new and old identifiers have not been set in said second management file;
setting said new and old identifiers to each file in said two second management files;
updating the old version to the new version of said new and old identifiers after updating a file to which the old version of said new and old identifiers has been set; and
updating the new version to the old version of said new and old identifiers after updating the file to which the old version of said new and old identifiers has been set;

According to this, in the process having the management file to be duplexed, it is not necessary to perform the file copy whenever the update of the file occurs, so that it becomes possible to always update the old file only by means of checking the new and old identifiers, thereby making it possible to achieve improvement in speed of the process.

Alternatively, in the above, it includes the steps of:
in an occurrence of an abnormal state where the existence of said first management file or said second management file to which the new version of said new and old identifiers is set has not been verified,
verifying whether or not said first management file to which the old version of said new and old identifiers has been set exists;
updating the old version to the new version of said new and old identifiers, when the existence of said first management file is verified;
verifying whether or not said second management file to which the old version of said new and old identifiers has been set exists; and
updating the old version to the new version of said new and old identifiers, when the existence of said second management file is verified.

According to this, it becomes possible to recover a state of the memory card to a normal state from an abnormal state. In the process having the management file to be duplexed, it becomes possible to update the old file only by means of checking the new version or the old version as compared with performing the file copy whenever the file is updated. As a result, that makes it possible to achieve improvement in speed of the process.

### (Modification (D) of the second embodiment)

Then, description will be made of a method of managing the file structure in the memory card in a modification (D) of the second embodiment.

Also in the duplexing process of the management file achieved in the modifications (B) and (C) so far, when a right loss state owing to a user, such that the SD memory card itself is be broken or lost occurs, it will become impossible for the user to re-obtain a right of the contents data. In the modification (D) , a mechanism of contents right protection so as to be able to deal with even such a worst case is provided.

As a premise of an embodiment assumed this time, the second management file is very important information stored in the authentication area as shown in the modifications (B) and (C). Once one of the second management files is copied to an external memory, copyright protection contents data may also be re-obtained by various SD memory cards. For this purpose, a contents distribution source generally intends to securely store the second management file in the authentication area from a viewpoint of copyright protection. It is not assumed to supply the second management file to an external memory area.

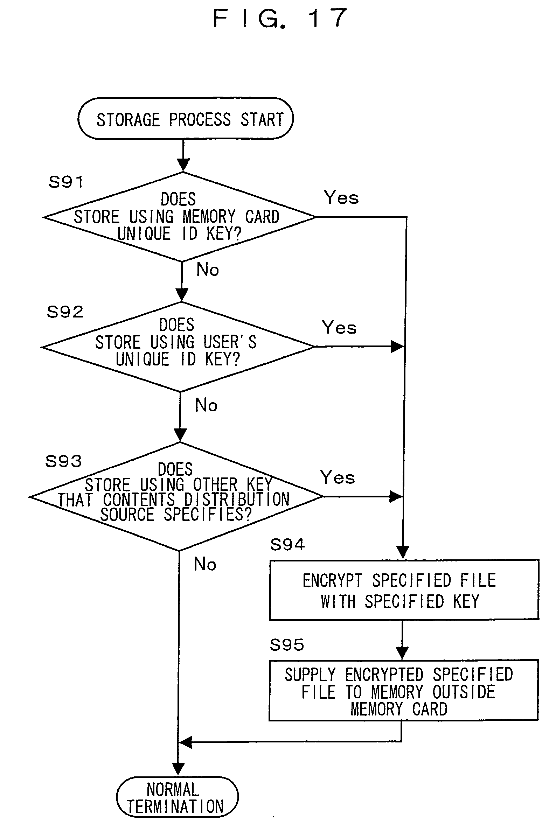

However, in order to ensure user's convenience and security, based on FIG. 17, description will be made of the modification (D) which securely achieves a mechanism for supplying the second management file to the external memory area in the following.

In a process for a user to store the second management file in an external memory such as a personal computer, when an encryption method that a contents distribution source specifies is a unique ID key of the SD memory card, (step S91) , the flow proceeds to step S94, and the second management file is encrypted using the unique ID key of the SD memory card to be supplied to the external memory at step S95.

In this case, even when the second management file is lost, it is possible to decrypt the second management file using the unique ID key of the SD memory card as far as it is in the same SD memory card, when returning the second management file stored in the external memory to the SD memory card. Accordingly, the second management file can be restored to the file similar to that previously held, and it becomes also possible to restore the contents right itself.

Next, in a process for a user to store the second management file in the external memory, when the encryption method that the contents distribution source specifies is the user ID key that the contents distribution source manages (step S92) , the flow proceeds to step S94, and the second management file is encrypted using the user ID key that the contents distribution source manages, and is supplied to the external memory at step S95.

In this case, even when the SD memory card itself is lost and another SD memory card becomes available, a user ID key that the contents distribution source manages is re-obtained, when it is verified to be the same user by contents distribution source, and it is possible to decrypt the second management file using the user ID key that the contents distribution source manages, when returning the second management file stored in the external memory to the SD memory card. Accordingly, the second management file can be restored to the file similar to that previously held, and it becomes also possible to restore the contents right itself.

Moreover, in a process for a user to store the second management file in the external memory, a key that the use wants to restrain a right is not necessary the key shown in two examples described above at all, it will be readily understood that a file distribution source and a copyright holder can specify the key arbitrarily and it will be readily understood that the copyright holder can completely decide freely what kind of value is used as the key (step S93).

It becomes therefore possible for a contents buyer to freely and securely store the obtained file in the external memory areas, such as a personal computer, so that it becomes possible for both of the user and the contents distribution source to securely protect the right.

However, it will be readily understood that a file which becomes a subject capable of the external output using the arbitrary key is not limited to the above second management file, but may also be applicable to all files.

In summary, it may be referred to as follows.

A method of managing the file structure in the memory card in the modification (D) includes the steps of:
when storing a high priority file in a secure external memory area of the memory card,
obtaining a contents data usage restriction key arbitrarily defined by a file usage right owner from an area that said right owner has defined;
encrypting a file using said contents data usage restriction key;
supplying the file encrypted using said contents data usage restriction key to the external memory area of said memory card with a key number;
re-inputting the file which has been supplied to said external memory area of said memory card with the key number to the memory card; and
decrypting the file as it was in the memory card using the contents data usage restriction key corresponding to said key number.

According to this, it is possible to store a state of the memory card in the external memory area, and thereby making it possible to restore the contents data with ease.

In the above, a plurality of embodiments have been described. According to these embodiments, a part of the recording area of the memory card is made into the authentication area (made into the key storage area) , so that this authentication area (key storage area) and the other general area are managed integrally and cooperatively, thereby making it possible to verify the validity. It is therefore possible to individually store the encrypted data and the contents encryption key in individual areas to cooperatively manage them, thereby making it possible to improve the security.

In addition, while finding an abnormal state of the contents data and the key management information in the memory card, the duplexing mechanism and the secure storage mechanism to the external memory area of the management file are provided, so that a file right protection feature in abnormality occurrences is ensured, and a user's contents right protection is validated.

Furthermore, such management can be performed without imposing a heavy load on a computer or the like.

As described above, a method of managing the file structure in question mainly records and reproduces the image information, such as SD memory card, especially video information, music information, or the like and as for a memory card which requires a verification of validity from a viewpoint of security, it is useful as a technology to achieve storing the encrypted data and the contents encryption key in individual areas and cooperatively managing the same

The present invention is not limited only to the embodiments described, and various modifications may be carried out within the scope of that technical spirit.

Although the above embodiments are the invention on a method of managing the file structure in the memory card, following expansions are also possible as a file structure managing program in the memory card.
(1) A program of managing the file structure in a memory card includes the steps of:
   verifying whether or not a first management file exists in a general area of a memory card which is generally accessible;
   verifying whether or not available information on an encryption key stored in said first management file exists, when existence of said first management file is verified; and
   verifying whether or not a second management file exists in an authentication area which requires an authentication process for accessing a memory, when existence of the available information on said encryption key is verified,
   wherein the program is comprised as a computer executable program.
(2) A program corresponding to a method of managing the file structure of the first embodiment includes the steps of:
   verifying whether or not a contents storage folder exists in a general area of a memory card which is generally accessible;
   verifying whether or not a first management file exists in said general area, when existence of said contents storage folder is verified;
   verifying whether or not available information on an encryption key stored in said first management file exists, when existence of said first management file is verified; and
   verifying whether or not a second management file exists in an authentication area which requires an authentication process for accessing a memory, when existence of the available information on said encryption key is verified,
   wherein the program is comprised as a computer executable program.
(3) A program corresponding to a method of managing the file structure of the first modification includes the steps of :
   verifying whether or not a contents storage folder exists in a general area of a memory card which is generally accessible;
   verifying whether or not contents data exists in said contents storage folder, when existence of said contents storage folder is verified;
   verifying whether or not a first management file exists, when existence of said contents data is verified;
   verifying whether or not available information on an encryption key stored in said first management file exists, when existence of said first management file is verified; and
   verifying whether or not a second management file exists in an authentication area which requires an authentication process for accessing a memory, when existence of the available information on said encryption key is verified,
   wherein the program is comprised as a computer executable program.
(4) A program corresponding to a method of managing the file structure of the second modification includes the steps of :
   verifying whether or not a contents storage folder exists in a general area of a memory card which is generally accessible ;
   verifying whether or not contents data exists in said contents storage folder, when existence of said contents storage folder is verified;
   verifying whether or not a first management file exists , when existence of said contents data is verified;
   judging whether or not said contents data whose existence has been verified is encrypted; and
   verifying whether or not a second management file exists in an authentication area which requires an authentication process for accessing a memory, when said contents data is judged to have been encrypted,
   wherein the program is comprised as a computer executable program.
(5) A program corresponding to a method of managing the file structure of the third modification includes the steps of:
   verifying whether or not a contents storage folder exists in a general area of a memory card which is generally accessible;
   verifying whether or not contents data exists in said contents storage folder, when existence of said contents storage folder is verified;
   verifying whether or not a first management file exists, when existence of said contents data is verified;
   judging whether or not said contents data whose existence has been verified is encrypted;
   verifying whether or not a second management file exists in an authentication area which requires an authentication process for accessing a memory, when said contents data is judged to have been encrypted;
   verifying whether or not available information on an encryption key stored in said first management file exists, when said contents data is judged not to have been encrypted; and
   verifying whether or not the second management file exists in the authentication area which requires the authentication process for accessing the memory, when existence of the available information on said encryption key is verified,
   wherein the program is comprised as a computer executable program.
(6) A program corresponding to a method of managing the file structure of the second embodiment includes the steps of:
   verifying whether or not a first management file exists in a general area of a memory card which is generally accessible;
   verifying whether or not available information on an encryption key stored in said first management file exists, when existence of said first management file is verified;
   verifying whether or not a second management file exists in an authentication area which requires an authentication process for accessing a memory, when existence of the available information on said encryption key is verified;
   verifying whether or not an available encryption key exists in said authentication area, when existence of said second management file is verified; and
   verifying whether or not encrypted data exists in a contents storage folder of said general area, when existence of said encryption key is verified,
   wherein the program is comprised as a computer executable program.
(7) A program corresponding to a method of managing the file structure of the modification (A) includes the steps of:
   when abnormalities in consistency between the encryption key and the encrypted data occur in spite the existence of the second management file,
   verifying whether or not contents purchase history information exists in said second management file information;
   re-accessing an area where a contents right owner defines, when existence of said contents purchase history information is verified;
   verifying whether or not a contents property right exists in said second management file based on said contents purchase history information, when said access is established securely;
   re-obtaining both or either the contents data and/or the key information encrypted with the same key as a previous key or a key different from that, when it is verified to be a legal owner of said contents data; and
   resetting the encrypted data and the key information obtained by said process within a suitable folder or a field where those should originally exist from said second management file,
   wherein the program is comprised as a computer executable program capable of recovering a state of said memory card to a normal state from an abnormal state.
(8) A program corresponding to a method of managing the file structure of the modification (B) includes the steps of:
   when newly adding contents data or deleting existing contents data,
   in a process of updating said first management file and said second management file,
   creating a copy of said first management file as a different file name before updating said first management file;
   updating information on said first management file after the copy of said first management file is correctly created;
   creating a copy of said second management file as a different file name before updating said second management file; and
   updating information on said second management file after the copy of said second management file is correctly created,
   wherein the program is comprised as a computer executable program.
(9) A program corresponding to a method of managing the file structure of the modification (B) includes the steps of:
   in an occurrence of an abnormal state where the existence of said first management file or said second management file has not been verified,
   verifying whether or not a copy file of said first management file exists, when the existence of said first management file has not been verified;
   re-naming said copy file to a formal first management file name newly, when the existence of the copy file of said first management file is verified;
   verifying whether or not a copy file of said second management file exists, when the existence of said second management file has not been verified; and
   re-naming said copy file to a formal second management file name newly, when the existence of the copy file of said second management file is verified,
   wherein the program is comprised as a computer executable program capable of recovering a state of said memory card to a normal state from an abnormal state.
(10) A program corresponding to a method of managing the file structure of the modification (C) includes the steps of:
   when newly adding contents data or deleting existing contents data,
   in a process of updating said first management file and said second management file,
   copying said first management file to be duplexed, when new and old identifiers have not been set in said first management file;
   setting said new and old identifiers to each file in said two first management files;
   updating the old version to the new version of said new and old identifiers after updating a file to which the old version of said new and old identifiers has been set;
   updating the new version to the old version of said new and old identifiers after updating the file to which the old version of said new and old identifiers has been set;
   copying said second management file to be duplexed, when the new and old identifiers have not been set in said second management file;
   setting said new and old identifiers to each file in said two second management files;
   updating the old version to the new version of said new and old identifiers after updating a file to which the old version of said new and old identifiers has been set; and
   updating the new version to the old version of said new and old identifiers after updating the file to which the old version of said new and old identifiers has been set,
   wherein the program is comprised as a computer executable program.
(11) A program corresponding to a method of managing the file structure of the modification (C) includes the steps of:
   in an occurrence of an abnormal state where the existence of said first management file or said second management file to which the new version of said new and old identifiers is set has not been verified,
   verifying whether or not said first management file to which the old version of said new and old identifiers has been set exists;
   updating the old version to the new version of said new and old identifiers, when the existence of said first management file is verified;
   verifying whether or not said second management file to which the old version of said new and old identifiers has been set exists; and
   updating the old version to the new version of said new and old identifiers, when the existence of said second management file is verified,
   wherein the program is comprised as a computer executable program capable of recovering a state of said memory card to a normal state from an abnormal state.
(12) A program corresponding to a method of managing the file structure of the modification (D) includes the steps of:
   when storing a high priority file in a secure external memory area of a memory card,
   obtaining a contents data usage restriction key arbitrarily defined by a file usage right owner from an area that said right owner has defined;
   encrypting a file using said contents data usage restriction key;
   supplying the file encrypted using said contents data usage restriction key to the external memory area of said memory card with a key number;
   re-inputting the file which has been supplied to said external memory area of said memory card with the key number to the memory card; and
   decrypting the file as it was in the memory card using the contents data usage restriction key corresponding to said key number,
wherein the program is comprised as a computer executable program capable of storing a state of said memory card to said external memory area.

Incidentally, it is also possible to expand to a computer readable record medium which records the program configured as above.

Moreover, it is also possible to expand the above method of managing the file structure in each memory card as a file structure management device in a memory card having a similar configuration.

## Claims

1. A method of managing a file structure in a memory card, comprising the steps of:
verifying whether or not a first management file exists in a general area of a memory card which is generally accessible;
verifying whether or not available information on an encryption key stored in said first management file exists, when existence of said first management file is verified; and
verifying whether or not a second management file exists in an authentication area which requires an authentication process for accessing a memory, when existence of the available information on said encryption key is verified.

2. A method of managing a file structure in a memory card, comprising the steps of:
verifying whether or not a contents storage folder exists in a general area of a memory card which is generally accessible;
verifying whether or not a first management file exists in said general area, when existence of said contents storage folder is verified;
verifying whether or not available information on an encryption key stored in said first management file exists, when existence of said first management file is verified; and
verifying whether or not a second management file exists in an authentication area which requires an authentication process for accessing a memory, when existence of the available information on said encryption key is verified.

3. A method of managing a file structure in a memory card, comprising the steps of:
verifying whether or not a contents storage folder exists in a general area of a memory card which is generally accessible;
verifying whether or not contents data exists in said contents storage folder, when existence of said contents storage folder is verified;
verifying whether or not a first management file exists, when existence of said contents data is verified;
verifying whether or not available information on an encryption key stored in said first management file exists, when existence of said first management file is verified; and
verifying whether or not a second management file exists in an authentication area which requires an authentication process for accessing a memory, when existence of the available information on said encryption key is verified.

4. A method of managing a file structure in a memory card, comprising the steps of:
verifying whether or not a contents storage folder exists in a general area of a memory card which is generally accessible;
verifying whether or not contents data exists in said contents storage folder, when existence of said contents storage folder is verified;
verifying whether or not a first management file exists, when existence of said contents data is verified;
judging whether or not said contents data whose existence has been verified is encrypted;
verifying whether or not a second management file exists in an authentication area which requires an authentication process for accessing a memory, when said contents data is judged to have been encrypted;

5. A method of managing a file structure in a memory card, comprising the steps of:
verifying whether or not a contents storage folder exists in a general area of a memory card which is generally accessible;
verifying whether or not contents data exists in said contents storage folder, when existence of said contents storage folder is verified;
verifying whether or not a first management file exists, when existence of said contents data is verified;
judging whether or not said contents data whose existence has been verified is encrypted;
verifying whether or not a second management file exists in an authentication area which requires an authentication process for accessing a memory, when said contents data is judged to have been encrypted;
verifying whether or not available information on an encryption key stored in said first management file exists, when said contents data is judged not to have been encrypted;
verifying whether or not the second management file exists in the authentication area which requires the authentication process for accessing the memory, when existence of the available information on said encryption key is verified.

6. A method of managing a file structure in a memory card, comprising the steps of:
verifying whether or not a first management file exists in a general area of a memory card which is generally accessible;
verifying whether or not available information on an encryption key stored in said first management file exists, when existence of said first management file is verified; and
verifying whether or not a second management file exists in an authentication area which requires an authentication process for accessing a memory, when existence of the available information on said encryption key is verified.
verifying whether or not an available encryption key exists in said authentication area, when existence of said second management file is verified; and
verifying whether or not encrypted contents data exists in a contents storage folder of said general area, when existence of said encryption key is verified.

7. A method of managing the file structure according to claim 6, the method of managing the file structure in the memory card, comprising the steps of: when abnormalities in consistency between said encryption key and said encrypted contents data occur in spite the existence of said second management file,
verifying whether or not contents purchase history information exists in said second management file information;
re-accessing an area where a contents right owner defines, when existence of said contents purchase history information is verified;
verifying whether or not a contents property right exists in said second management file based on said contents purchase history information, when said access is established securely;
re-obtaining both or either contents data and/or key information encrypted with the same key as a previous key or a key different from that, when it is verified to be a legal owner of said contents data; and
resetting the encrypted contents data and the key information obtained by said process within a suitable folder or a field where those should originally exist from said second management file,
wherein it is possible to recover a state of said memory card to a normal state from an abnormal state.

8. A method of managing the file structure according to claim 6, the method of managing the file structure in the memory card, comprising the steps of: when newly adding contents data or deleting existing contents data, in a process of updating said first management file and said second management file,
creating a copy of said first management file as a different file name before updating said first management file;
updating information on said first management file after the copy of said first management file is correctly created;
creating a copy of said second management file as a different file name before updating said second management file; and
updating information on said second management file after the copy of said second management file is correctly created.

9. A method of managing the file structure according to claim 8, the method of managing the file structure in the memory card, comprising the steps of: in an occurrence of an abnormal state where the existence of said first management file or said second management file has not been verified,
verifying whether or not a copy file of said first management file exists, when the existence of said first management file has not been verified;
re-naming said copy file to a formal first management file name newly, when the existence of the copy file of said first management file is verified;
verifying whether or not a copy file of said second management file exists, when the existence of said second management file has not been verified; and
re-naming said copy file to a formal second management file name newly, when the existence of the copy file of said second management file is verified,
wherein it is possible to recover a state of said memory card to a normal state from an abnormal state.

10. A method of managing the file structure according to claim 6, the method of managing the file structure in the memory card, comprising the steps of: when newly adding contents data or deleting existing contents data, in a process of updating said first management file and said second management file,
copying said first management file to be duplexed, when new and old identifiers have not been set in said first management file;
setting said new and old identifiers to each file in said two first management files;
updating the old version to the new version of said new and old identifiers after updating a file to which the old version of said new and old identifiers has been set;
updating the new version to the old version of said new and old identifiers after updating the file to which the old version of said new and old identifiers has been set;
copying said second management file to be duplexed, when the new and old identifiers have not been set in said second management file;
setting said new and old identifiers to each file in said two second management files;
updating the old version to the new version of said new and old identifiers after updating a file to which the old version of said new and old identifiers has been set; and
updating the new version to the old version of said new and old identifiers after updating the file to which the old version of said new and old identifiers has been set;

11. A method of managing the file structure according to claim 10, the method of managing the file structure in the memory card, comprising the steps of: in an occurrence of an abnormal state where the existence of said first management file or said second management file to which the new version of said new and old identifiers is set has not been verified,
verifying whether or not said first management file to which the old version of said new and old identifiers has been set exists;
updating the old version to the new version of said new and old identifiers, when the existence of said first management file is verified;
verifying whether or not said second management file to which the old version of said new and old identifiers has been set exists; and
updating the old version to the new version of said new and old identifiers, when the existence of said second management file is verified,
wherein it is possible to recover a state of the memory card to a normal state from an abnormal state.

12. A method of managing the file structure according to claim 6, the method of managing the file structure in the memory card, comprising the steps of: when storing a high priority file in a secure external memory area of the memory card,
obtaining a contents data usage restriction key arbitrarily defined by a file usage right owner from an area that said right owner has defined;
encrypting a file using said contents data usage restriction key;
supplying the file encrypted using said contents data usage restriction key to the external memory area of said memory card with a key number;
re-inputting the file which has been supplied to said external memory area of said memory card with the key number to the memory card; and
decrypting the file as it was in the memory card using the contents data usage restriction key corresponding to said key number,
wherein it is possible to store a state of said memory card in said external memory area of said memory card.

13. A method of managing the file structure in the memory card according to any one of claim 1 through claim 12, wherein said "authentication area" is replaced to a "key storage area".

14. A computer readable recording medium which records a program including each step included in a method of managing the file structure in the memory card according to any one of claim 1 through claim 12.

15. A method of managing the file structure in the memory card according to any one of claim 1 through claim 12, wherein the "step" is replaced to an "element".
